# EUROPEAN PATENT SPECIFICATION

(11) **EP 2 824 751 B1**
(45) Date of publication and mention of the grant of the patent: **20.04.2016**
(21) Application number: 13176376.5
(22) Date of filing: 12.07.2013
(51) Int. Cl.: H01M 10/054, H01M 10/0568, H01M 10/0569, H01M 6/16, H01M 4/38, H01M 4/58

(54) **Bisamide-based electrolyte for magnesium battery**
Bisamid-Elektrolyt für Magnesiumbatterie
Électrolyte à base de bisamide pour batterie au magnésium

(43) Date of publication of application: 14.01.2015
(73) Proprietor: Karlsruher Institut für Technologie, 76131 Karlsruhe (DE)
(72) Inventor: HAHN, Horst, 64342 Seeheim-Jugenheim (DE); FICHTNER, Maximilian, 68723 Oftersheim (DE); ZHAO-KARGER, Zhirong, 76149 Karlsruhe (DE)
(74) Representative: Fitzner, Uwe

(56) References cited:
- EP-A1- 2 169 755
- US-A1- 2011 244 338
- US-A1- 2012 219 867
- H.S. KIM ET AL: "Structure and compatibility of a magnesium electrolyte with a sulphur cathode", NATURE COMMUNICATIONS, vol. 2, 9 August 2011 (2011-08-09), XP002716826, ISSN: 2041-1723

## Description

The instant invention concerns specific new in situ generated electrolytes for (secondary) magnesium batteries, their preparation, uses and batteries employing them.

### Background of the invention:

Rechargeable magnesium batteries have been recognized as one of the most promising electrochemical energy storage systems owing to their operational safety, low raw material cost and high theoretical volumetric capacity of 3832 mA h cm⁻³, which is significantly higher than the 2062 mA h cm⁻³ of lithium. Mg possesses a negative reduction potential of -2.356 V *vs* NHE and can be used as anode without the problem of dentrite formation, which renders Li metal unsafe for the utilization as high capacity anode material.

For example, US 2008/0182176 A1 describes an electrochemical cell having a magnesium anode and an intercalation cathode having a modified Chevrel phase. The electrolyte is represented by the formula Mg(AlRₓCl₄₋ₓ)₂ and/or (MgR₂)ₓ-(AlCl₃₋ₙRₙ)_{y}, wherein R is selected from a group comprising methyl, ethyl, butyl, phenyl and derivatives thereof, n is higher than 0 and lower than 3, x is higher than 0 and lower than 3 and y is higher than 1 and lower than 5 in an ether solvent.

However, such in situ generated electrolytes are highly nucleophilic and intrinsically strong reducing agents due to the presence of RMgCl and R₂Mg (R represents alkyl or aryl group) in the reaction mixture. Therefore they are only compatible with a cathode material which is chemically inert to the Grignard based electrolyte. Hence, the lack of suitable electrolytes remains the biggest obstacle to develop high energy magnesium batteries based on potential high energy conversion cathode materials, such as sulphur or air, which, in combination with a Mg anode, possess an attractive theoretical energy density of 4500 and 11840 Wh/l, respectively.

US 8,354,193 B2 describes the preparation and electrochemical behaviour of electrolyte by addition of Lewis acid AlCl₃ to an ether solution of hexamethyldisilazide magnesium chloride and the THF solution of the pure crystallized products with a formula [Mg₂(µ-Cl)₃·6THF][HMDSAlCl₃] obtained from the reaction shows an improved voltage stability of 3.2 V. Nevertheless, the *in situ* generated electrolyte from the reaction of hexamethyldisilazide magnesium chloride and AlCl₃ (3:1) does not differ much from the electrochemical behaviour of hexamethyldisilazide magnesium chloride as disclosed by H. S. Kim et al., Nat. Commun., 2011, 2, 427. It has also been revealed by the latter that overcharging occurs while recharging the Mg/S battery using the THF solution of the recrystallized magnesium salt as electrolyte due to the dissolution of the sulphur cathode. Additionally, US 8,354,193 B2 discloses the reaction of Lewis acid AlCl₃ with bis(hexamethyldisilazide) magnesium exclusively in THF and with a ratio of 4:1 but not any properties of the product. Similar disclosure can be found in US 2011/0262804 A1, showing inter alia the necessity to recrystallize the electrolytes.

US 2013/0034780 A1 describes the electrolyte containing an electrochemically active magnesium salt obtained by reaction of a Grignard reagent or Hauser base with a boron compound of formula BR₃ (R represents alkyl or aryl group). The electrolyte is stable to 2.6 V *vs* Mg.

US 2012/219867 A1 discloses a magnesium secondary battery comprising a positive electrode, a negative electrode, a separator membrane and an electrolytic solution including a nitrogen-containing heterocyclic magnesium halide and an organic ether solvent.

EP 2 169 755 A1 describes a magnesium battery which is constituted of a negative electrode formed of metallic magnesium, a positive electrode and a magnesium ion-containing non-aqueous electrolytic solution prepared by dissolving magnesium(II) chloride (MgCl 2) and dimethylaluminum chloride ((CH3)2 AlCl) in tetrahydrofuran (THF).

It is necessary to discover new electrolytes in solvents with low solubility of sulphur and polysulfide for a new approach towards high energy density Mg/S battery.

### Object of the invention:

It was an object of the instant invention to provide new electrolytes in solvents with low solubility of sulphur and polysulfide for a new approach towards high energy density Mg/S batteries.

It was also an object of the instant invention to provide a process for preparing such electrolytes.

It was further an object to provide new magnesium-based secondary batteries.

Not the least it was an object to provide uses for specifically prepared electrolytes.

### Summary of the invention:

The object of the instant invention has been solved by an electrolyte for magnesium batteries generated in situ by reaction of bis(hexamethyldisilazide)magnesium with AlCl₃ in a molar ratio of from 1.3:1 to 1:3 in the presence of an organic ether solvent, processes for the preparation of such electrolytes, methods for manufacturing of magnesium batteries comprising these electrolytes, uses of the electrolytes and magnesium batteries comprising these electrolytes.

### Definition of terms:

The following description is made for the purpose of illustrating the general principles of the present invention and is not meant to limit the inventive concepts claimed herein. Further, particular features described herein can be used in combination with other described features in each of the various possible combinations and permutations.

Unless otherwise specifically defined herein, all terms are to be given their broadest possible interpretation including meanings implied from the specification as well as meanings understood by those skilled in the art and/or as defined in dictionaries, treatises, etc.

It must also be noted that, as used in the specification and the appended claims, the singular forms "a", "an" and "the" include plural referents unless otherwise specified.

As used herein, the term "about" when combined with a value refers to plus and minus 10% of the reference value unless otherwise specified. For example, a temperature of about 50°C refers to a temperature of 50°C ± 5°C, etc.

Any indications of quantity given in the instant invention are to be considered as indications of quantity by weight, if not specified otherwise.

In the instant invention the term "room temperature" is intended to mean a temperature of 20°C; if not specified otherwise, temperature values are to be considered as degrees centigrade (°C).

In the instant invention are the given reactions or process steps are carried out at normal pressure/atmospheric pressure, that is at 1013 mbar.

In the instant invention the term "and/or" includes any and all combinations of one or more of the associated listed items.

In the instant invention the ratio of two compounds to one another is sometimes shortened, for example the expression (HMDS)₂Mg-2AlCl₃ means that (HMDS)₂Mg and AlCl₃ are present in a ration of 1:2.

### Detailed description:

A non nucleophilic electrolyte with an anodic stability to 3.9 V relative to a magnesium reference is provided. The electrolyte containing an electrochemically active magnesium salt is obtained from a reaction between a magnesium bisamide base and the Lewis acid aluminium trichloride in a molar ration of from 1.3:1 to 1:3, preferably 1:1.5 to 1:2.5, especially preferred 1:2, in a polar aprotic solvent.

The first embodiment of the instant invention is an electrolyte for magnesium batteries, preferably secondary magnesium batteries, generated in situ by reaction of bis(hexamethyldisilazide) magnesium with AlCl₃ in a molar ratio of from 1.3:1 to 1:3, preferably 1:1.5 to 1:2.5, especially preferred 1:2, in the presence of an organic ether solvent.

The reaction of the instant invention can be described by the following equation (1):

2Mg[N(Si(CH₃)₃)₂]₂+4AlCl₃→[Mg₂Cl₃]⁺ [((CH₃)₃Si)₂NAlCl₃]⁻ + 3((CH₃)₃Si)₂NAlCl₂

According to the instant invention, the ether solvent is selected from the group consisting of tetrahydrofuran (THF), 2-methyltetrahydrofuran (2-MeTHF), diethyleneglycol-dimethylether (diglyme), tetraethyleneglycol-dimethylether (tetraglyme) and mixtures thereof, preferably THF or diglyme.

Besides THF and 2-methyl-tetrahydrofuran, glymes are also preferred as solvent for electrolyte because of their high boiling point, high dielectric constant, strong solvating power and good chemical stability.

According to the instant invention, the electrolyte obtained in situ by the reaction of bis(hexamethyldisilazide) magnesium ((HMDS)₂Mg) with AlCl₃ in an organic ether solvent and in a molar ratio of 1:2 is not separated, but used as generated in situ.

A further embodiment of the instant invention is a process for preparing an electrolyte, especially as described above, wherein
i) a solution of bis(hexamethyldisilazide) magnesium in an organic ether solvent, preferably selected from the group consisting of tetrahydrofuran, 2-methyltetrahydrofuran, diglyme, tetraglyme and mixtures thereof, especially preferably THF or diglyme, is provided,
ii) a solution of AlCl₃ in an organic ether solvent, preferably selected from the group consisting of tetrahydrofuran, 2-methyltetrahydrofuran, diglyme, tetraglyme and mixtures thereof, especially preferably THF or diglyme, which can be the same or different as that of i), is added to the solution of i),
iii) the solutions are mixed,
wherein the molar ratio of bis(hexamethyldisilazide) magnesium to AlCl₃ is 1:2, and wherein the resulting product is not separated.

Still another embodiment of the instant invention is a method for manufacturing a secondary magnesium battery comprising the following steps:
(a) providing an anode, preferably a magnesium metal anode,
(b) providing a cathode, preferably comprising a stainless steel current collector coated with a Chevrel-phase intercalation represented by the formula Mo₆S₈,
(c) arranging a separator that allows a flow of magnesium ions during operation of the said battery, preferably comprising glass fibre, between anode and cathode such that the cathode is physically separated from the anode, and
(d) adding the non-nucleophilic electrolyte according to the instant invention. The use of the electrolytes according to the instant invention for magnesium batteries, preferably for secondary magnesium batteries, especially for those comprising a Mo₆S₈ intercalation cathode, is also an embodiment of the instant invention.

A secondary magnesium battery comprising
A) an electrolyte according to any of claims 1 to 7 or prepared according to claims 8 to 10,
B) Mo₆S₈ intercalation cathode,
C) a separator and
D) a magnesium metal anode is another specific embodiment of the instant invention.

It was surprising that the instant invention's electrolyte achieves good results despite not being separated ((re-)crystallized) as suggested to be necessary by the prior art.

The instant invention's electrolyte shows very good compatibility with the Mo₆S₈ intercalation cathode. Hence the the instant invention's electrolyte can be practically used in rechargeable Mg battery systems. The one-step synthesis of the instant invention in accord with the reaction stoichiometry between a bisamide Mg compound and AlCl₃ at a ratio of 1:2 can be practically used for the manufacture of the electrolyte on a large scale. The synthetic process of the instant invention offers the feasibility of tuning the properties of the electrolyte including the voltage stability and the compatibility with the electrode material by using different solvents.

As Mg/S batteries suffer similar challenges caused by the dissolution of sulfur and the shuttling of polysulfide between cathode and anode as Li/S batteries do, the instant invention's process employs solvents with low solubility of polysulfide and sulphur. So the instant invention's electrolyte and the instant invention's process for preparing it provide solution for the development of the high energy density Mg/S batteries.

The instant invention's electrolyte solution shows high ionic conductivity, high reversibility for the Mg deposition and dissolution, and an anodic stability which is as good as that of the recrystallized compound according to the prior art.

Electrolytes with concentrations between 0.2 to 1 mol/l (based on the Mg bisamide used for the electrolyte) show especially good properties. Preferred are those of concentrations between 0.25 and 0.5 mol/, particularly preferred is the electrolyte with a concentration of 0.35 mol/l exhibits an ionic conductivity to 1.7 mS/cm and allows magnesium deposition and dissolution with excellent cycling efficiency.

The instant invention's electrolyte obtained with an (HMDS)₂Mg : AlCl₃ ratio of 1:2 shows higher electrochemical stability that for example that of H. S. Kim et al., Nat. Commun., 2011, 2, 427 and can be advantageously used as-prepared with good potential stability.
Further, bisamide magnesium (HMDS)₂Mg is more stable at room temperature than Grignard compounds and accordingly, the instant invention's electrolyte can be prepared more easily.

The composition of the instant invention's electrolyte has been determined by NMR, mass spectroscopy and single crystal X-ray diffraction, which reveals that the bisamide Mg compound and AlCl₃ at a stoichiometric ratio of 1:2 yields the instant invention's electrolyte containing the stable electrochemical active magnesium compound [Mg₂Cl₃]⁺[((CH₃)₃Si)₂NAlCl₃]⁻ and the stable byproduct ((CH₃)₃Si)₂NAlCl₂.

The various embodiments of the instant invention, including those of the dependent claims, can be combined with each other in any desired manner.

A first exemplary embodiment of the instant invention is a non-nucleophilic electrolyte stable to a voltage of 2.8 to 3.9 V relative to a magnesium reference for use in a secondary magnesium battery is obtained by the reaction between a magnesium compound comprising nitrogen and aluminium trichloride in a molar ratio of 1:2 in an organic ether solvent.

A second exemplary embodiment of the instant invention is the non-nucleophilic electrolyte of the first embodiment, wherein the magnesium compound comprising nitrogen is a non-nucleophilic base represented by a formula (R₂N)₂Mg, in which R₂N represents following sterically hindered groups: hexamethyldisilylamide.

A third exemplary embodiment of the instant invention is the one of the foregoing non-nucleophilic electrolyte, wherein the organic ether solvent is selected from the group consisting of tetrahydrofuran, 2-methyl tetrahydrofuran, diglyme, tetraglyme and a mixture thereof.

A forth exemplary embodiment of the instant invention is one of the foregoing non-nucleophilic electrolyte showing an anodic stability of 3.3 V in THF and 3.9 V in diglyme relative to a magnesium reference.

A fifth exemplary embodiment of the instant invention is one of the foregoing non-nucleophilic electrolyte, wherein the magnesium compound comprising nitrogen is magnesium bis(hexamethyldisilazide), the organic solvent is tetrahydrofuran, and the obtained electrolyte comprises an electrochemically active magnesium salt of formula [Mg₂Cl₃]⁺[((CH₃)₃Si)₂NAlCl₃]⁻ and a byproduct of formula((CH₃)₃Si)₂NAlCl₂.

A further advantageous variation of the instant invention is an electrolyte as described above, wherein in addition to the ether solvent an ionic liquid is added in a volume ratio of from 0.5:1 to 2:1, preferably 1:1 to 1.5:1.
Preferably in this context, the the ether solvent is tetraglyme and the ionic liquid is selected from the group consisting of N-methyl-N-butyl-piperidinium bis(trifluorormethylsulfonyl) imide (Pp14-TFSI), 1-methyl-1-propylpiperidinium bis(trifluoromethylsulfonyl) imide (Pp13-TFSI), 1-Butyl-1-methylpyrrolidinium bis(trifluoromethylsulfonyl)imide (Py14-TFSI), 1-Methyl-1-propylpyrrolidinium bis(trifluoromethylsulfonyl)imide (Py13-TFSI), preferably N-methyl-N-butyl-piperidinium bis(trifluorormethanesulfonyl) imide.

The invention will now be explained by way of the figures and the following non-limiting examples.

### Short description of the figures:

**Figure 1** shows cyclic voltammograms illustrating the Mg deposition/dissolution of three THF solutions containing Lewis base (HMDS)₂Mg and Lewis acid AlCl₃ at different ratios: (solid line) 2:1, (dot line) 1:1, (dot-dash line) 1:2 ratio at a scan rate of 25 mV s⁻¹. The inset shows linear sweep voltammograms illustrating the typical voltage stability of the electrolyte with a scan rate of 5 mV s⁻¹; Pt with a surface area about 1 cm² was used as working electrode and Magnesium metal was used as reference at 25°C.

**Figure 2** shows the crystal structure of the main compound [Mg₂(µ-Cl)₃·6THF] [HMDSAlCl₃]·THF of the instant invention's electrolyte after being crystallized for structure verification.

**Figure 3** shows cyclic voltammograms illustrating the Mg deposition and dissolution of base (HMDS)₂Mg : AlCl₃ in ration 1:2 in different solvents at a scan rate of 25 mV/s. Inset shows a linear sweep voltammogram illustrating the typical potential stability of the electrolyte with a scan rate of 5 mV/s, Pt with a surface area about 1 cm² was used as working electrode and magnesium metal was used as reference at 25°C.

**Figure 4** shows the cycling efficiencies and the first 40 chronopotentiograms (inset) of Mg deposition and dissolution on Pt in the 0.35 M (HMDS)₂Mg-2 AlCl₃/diglyme electrolyte.

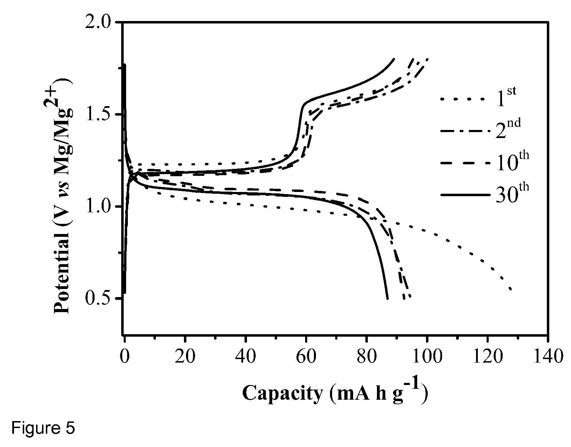

**Figure 5** shows the cycling behaviour of the rechargeable Mg/Mo₆S₈ cell using 0.35 M (HMDS)₂-2AlCl₃/diglyme electrolyte solution at a current rate of 10 mA/g at 25°C.

### Examples:

All the samples were handled in an argon-filled glove box with the water and oxygen concentrations below 1 ppm. The chemical operations were carried out on the bench under Ar (purity 99.9999 %) using standard Schlenk techniques or in glove box.

The chemicals including anhydrous solvents, magnesium-bis(hexamethyldisilazide) were purchased from Sigma-Aldrich and Alfa Aesar. Powder X-ray diffraction (XRD) patterns were recorded in the 20 range 10-70° using a Philips X'pert diffractometer equipped with Cu Kα source. Scanning electron microscopy (SEM) was performed with a LEO 1530 at 15 keV using carbon tape as substrate.
¹H and ¹³C spectra were recorded with a Bruker Advance II 500 spectrometer. ¹³C NMR was broadband ¹H decoupled. THF-*d*₈ was used as solvent for all the samples and the chemical shifts are reported in ppm using the residual solvent peak as reference. ESI mass spectra were acquired with a Bruker microTOF II. Samples were infused at a flow rate of 180 µL·h⁻¹. The ion transfer time was set to 70 µs, and 3000 scans were averaged in the data presented. For high resolution assignments the publicly available software molecular weight calculator was used to simulate mass spectra.

**X-ray Crystallography:** Crystals were removed from the reaction flask under a stream of nitrogen gas and immediately covered with a layer of perfluoropolyether oil (Riedel-de Haen). A suitable crystal was selected, attached to a glass fibre, and immediately placed in the low-temperature nitrogen stream. The data were collected with a STOE IPDS II diffractometer using Mo-Kα (λ = 0.71073 A) radiation. Structure solution and refinement against F2 were carried out using HELXS and SHELXL software.

### Synthesis of the electrolyte (HMDS)₂Mg-2AlCl₃

*Representative procedure for the synthesis of the THF solution of the electrolyte.* In an argon-filled glovebox, to a 10 ml screw capped vial charged with 1.7 ml of anhydrous THF, 255 mg (1.9 mmol) of AlCl₃ was added under stirring with a small dose to avoid an exothermic reaction. Subsequently the AlCl₃ solution was drop wise added to a 20 ml screw capped vial containing 0.5 equivalents of (HMDS)₂Mg dissolved in 1 ml of THF. Once all the AlCl₃ was added, the vial was capped and stirred stirring for 6 hours or overnight.

The electrolytes of (HMDS)₂Mg-2AlCl₃ in different solvents were prepared through the same procedures as above described; THF solution of the electrolytes 2(HMDS)₂Mg-AlCl₃ and (HMDS)₂Mg-AlCl₃ were prepared by varying the amount of AlCl₃.

### Preparation of (Mg₂(_{P}-Cl)₃·6THF)(HMDSAlCl₃)·THF

The resulting THF solution of the electrolyte (HMDS)₂Mg-2AlCl₃ was crystallized by slow diffusion of anhydrous hexane. The resulting crystals were washed with hexane and dried under vacuum. ¹H-NMR (*d*₈-THF, 500 MHz): δ 0.23 (s, CH₃), 1.83 (m, THF), 3.68(m, THF) ¹³C{H}-NMR (*d*₈-THF, 500 MHz): δ 67.2 (m THF), 25.1 (m, THF), 5.5 (s, CH₃).

### Crystallographic data for (Mg₂(µ-Cl)₃·6THF)(HMDSAlCl₃) THF

Mr = 953.42; space group *P21*_{/*c*}; a = 11.6331(8) A; b = 13.7394 (8) A; c = 31.943 (2) A; α = 90°; β = 93.752 (6)°; γ = 90°; V = 5094.6 (6) Å³; Z = 4; T = 180 K; colourless rod; crystal size: 0.14x0.16 x 0.39 mm; *ρ_{calcd}* = 1.243 g cm⁻³; µ(Mo-*Kα*) = 0.466 mm⁻¹; R₁(I >2σ(l)) = 0.0612 for 3813 data, *wR₂= 0.1609* for all 9596 data.
Refinement details, atom coordinates, thermal parameters, and full tables of bond lengths and angles have been deposited with the Cambridge Crystallographic Data Centre, No. CCDC-921294, copies of this information can be obtained free of charge from CCDC via http://www.ccdc.cam.ac.uk or E-Mail: deposit@ccdc.cam.ac.uk.

**Electrochemistry** Electrochemical studies were performed in Swagelok® type cells. All the electrode fabrication and building of electrochemical cells were done in an argon-filled glovebox. All electrolytes were prepared at a concentration of about 0.35 M with regard to Mg. Cyclic voltammograms and linear sweep voltammograms were obtained using a Zahner potentiostat with a two-electrode cell comprising a Pt disc as working electrode, Mg foil as reference electrode at a scan rate of 25 mV s⁻¹ and 5 mV s⁻¹, respectively. The conductivities were measured at 25°C by a conductivity meter CDM 230, Meter Lab Radiometer analytical.
Cathodes were prepared by coating a Mo₆S₈-carbon composite slurry (75% Mo₆S₈, 15% carbon black, 10% poly(tetrafluoroethylene) binder) on a stainless steel disc and dried at 120°C for 12 h. Typically, each electrode contained about 1.5 mg of the active material.

100-µm-thick Mg foil (Goodfellow) was used as the negative electrode and a borosilicate glass fibre sheet as separator. The sheet was saturated with the prepared electrolyte. The cells were placed in an incubator (Binder) to maintain a constant temperature of 25± 0.1°C
The electrochemical studies were carried out using an Arbin battery cycling unit.

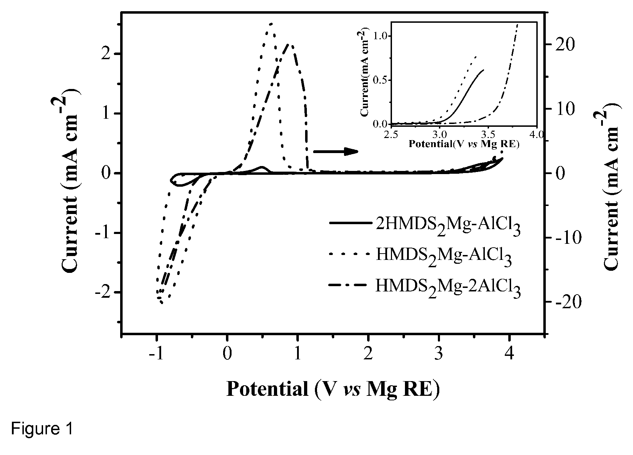

The electrolytes were synthesized by drop wise adding the AlCl₃-THF solution to previously prepared THF solutions containing appropriate amount of (HMDS)₂Mg based on the desired ratio of the base and acid. The reactions were moderate exothermic. The resulting solutions were stirred for 6 hours or more at room temperature (see experimental procedure details in the SI) to form electrolyte solutions with a concentration of 0.35 M with regard to molar amount of Mg. As reported in the literature, different Lewis base-acid ratio has a strong effect on the electrochemical performance of the Al-based electrolyte. The electrochemical performance of three THF solutions with different Lewis acid-base ratio using a cyclic voltammetry method were examined. Fig.1 shows the typical voltammograms of the THF solutions with the base and acid ratio of 2:1, 1:1 and 1:2 (denoted as 2(HMDS)₂Mg-AlCl₃, (HMDS)₂Mg-AlCl₃ and (HMDS)₂Mg-2AlCl₃, respectively) on a Pt working electrode. Reversible Mg deposition-dissolution could be achieved in all three electrolyte solutions as shown in Figure 1. The current density for Mg deposition and dissolution is increased by factor 8 by increasing the amount of AlCl₃ to 2 equivalents to (HMDS)₂Mg. The inset of linear sweep voltammograms shows that the (HMDS)₂Mg-2AlCl₃ also has the higher electrolyte decomposition potentials (ca. 3.4 V *vs* Mg RE) than those of the other electrolytes.

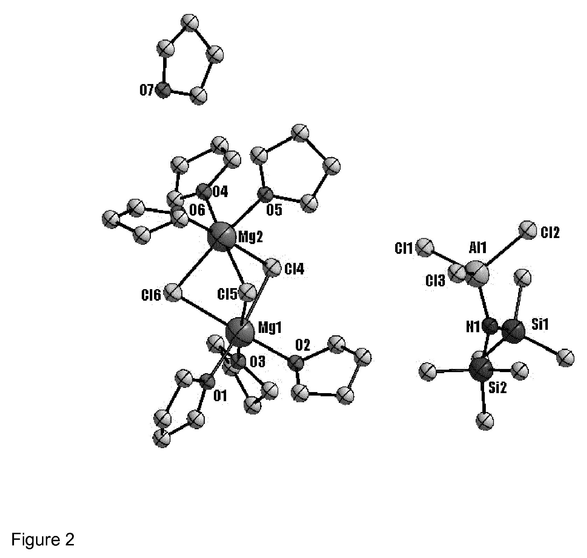

The morphology of the Mg deposited from the THF solution of HMDS₂Mg-2 AlCl₃ has also been characterized by XRD and SEM. After deposition at a current density of 2 mA cm⁻² for 2 hours, a thin film of Magnesium could be peeled from the platinum disc. The XRD patterns showed the Mg deposits had a (001) preferred orientation. The SEM images showed no dendrite formation of Mg deposits after cycling for 60 times.
To clarify the active species of the electrolyte, quantitative colourless crystals were prepared by slow diffusion of hexane into the *in situ* generated (HMDS)₂Mg-2AlCl₃*THF solution.
The crystal structure has been confirmed by single-crystal X-ray diffraction as [Mg₂Cl)₃][HMDSAlCl₃], **1** (Fig. 2), which reveals that the major product of the electrolyte consists of [Mg₂(µ-Cl)₃·6THF]⁺ cation and a tetrahedrally coordinated [HMDSAlCl₃]⁻ anion and one THF crystallized in the asymmetric unit of the monoclinic space group *P21*_{/}*_{c}.*

The obtained crystals were dissolved in THF to compare its electrochemical performance to that of *in situ* generated electrolyte. The electrolyte (HMDS)₂Mg -2AlCl₃ showed a stability comparable to that of the crystal redissolved electrolyte (with an oxidation stability of 3.2 V), which is different from the *in situ* generated electrolyte of HMDSMgCl with AlCl₃ described by H. S. Kim et al., Nat. Commun., 2011, 2, 427 (with an oxidation stability of 2.5 V).

The *in situ* generated electrolytes were further characterized by means of NMR and mass spectroscopy methods. Due to the solvation effects of magnesium compounds in THF, the signals in low field region of both ¹H and ¹³C{H} NMR spectra are assigned to THF. The pure colourless crystalline product obtained from the reaction mixture of (HMDS)₂Mg and AlCl₃ (1:3) dissolved in *d*₈-THF displays one singlet at 0.23 and 5.5 ppm in the ¹H and ¹³C{H} NMR spectrum, respectively, which are assigned to the -CH₃ group of the anion [HMDSAlCl₃]⁻. The components of the *in situ* generated electrolytes with different base and acid ratio have also been identified by NMR after removal of the solvents. The starting material (HMDS)₂Mg gives a signal with a chemical shift of 0.1 ppm in ¹H NMR and 6.5 ppm in the ¹³C{H} NMR spectrum for the -CH₃ group of the HMDS ligand. After (HMDS)₂Mg had reacted with varied equivalents of AlCl₃, one of the signals in both ¹H and ¹³C NMR spectrum for all three electrolytes is at the same position as that of the crystal, which confirms the formation the [Mg₂(µ-Cl)₃·6THF][HMDSAlCl₃] in the reaction between HMDS₂Mg and AlCl₃. The signal for (HMDS)₂Mg is present in the spectra for ratios (HMDS)₂Mg : AlCl₃ of 1:1 and (HMDS)₂Mg : AlCl₃ of 2:1, but not for (HMDS)₂Mg : 2AlCl₃ of 1:2, which confirms that the base and acid ratio at 1:2 is the optimum for the reaction. To further determine the second component in the *in situ* generated electrolyte of ratio (HMDS)₂Mg : 2AlCl₃ of 1:2 which is indicated by a chemical shift at 0.08 ppm in ¹H NMR spectrum, a mass spectroscopic analysis with the mother liquor after recrystallization of [Mg₂(µ-Cl)₃·6THF][HMDSAlCl₃] THF was performed. The signal at *m*/*z* = 223 can be assigned to [HMDSAlCl]⁺ which is in good accordance with the calculated isotopic patterns, and confirms the formation of HMDSAlCl₂.
Thus it was shown that the reaction between one equivalent of (HMDS)₂Mg and two equivalents of AlCl₃ can be represented by equation (1)

2 Mg[N(Si(CH₃)₃)₂]₂ + 4 AlCl₃ → [Mg₂Cl₃]⁺[(CH₃)₃SiNAlCl₃]⁻ + 3 ((CH₃)₃Si)₂NAlCl₂

For the samples from the reaction mixture of (HMDS)₂Mg with less than 2 equivalents AlCl₃, the chemical shifts of 0.23 in ¹H NMR and 5.5 ppm in ¹³C NMR spectra confirm the formation of [Mg₂Cl₃]⁺[((CH₃)₃Si)₂NACl₃]⁻. However, an additional signal is present at about 0.05 ppm in the ¹H NMR spectra, respectively, which was assigned to HMDSMgCl according to the reaction equation (2).

Mg[N(Si(CH₃)₃)₂]₂ + AlCl₃ → ((CH₃)₃Si)₂NMgCl + ((H₃)₃)₂NAlCl₂

Considering the case that the formation of [Mg₂Cl₃]⁺[((CH₃)₃Si)₂NACl₃]⁻ was observed in all the reactions between (HMDS)₂Mg and AlCl₃ with different compound ratio, it was shown that reaction (1) is thermodynamically favoured and the electrolyte obtained from (HMDS)₂Mg : AlCl₃ at the stoichiometric ratio of 1:2 contains only [Mg₂Cl₃]⁺[((CH₃)₃Si)₂NACl₃]⁻ as electrochemical active species.

We believe that the aluminate anion can be stabilized and the byproduct of HMDSAlCl₂ could be stabilized by the electron donating effect of HMDS ligand, which also benefits to the electrochemical stability of the in situ generated electrolyte (HMDS)₂Mg-2AlCl₃.

In contrast to the poor electrochemical stability of the *in situ* generated electrolyte by the reaction of HMDSMgCl and AlCl₃ (3:1) described by H. S. Kim et al., Nat. Commun., 2011, 2, 427, the *instant invention's* electrolyte obtained with an (HMDS)₂Mg: AlCl₃ ratio of 1:2 can be advantageously used as-prepared with good potential stability. In addition, bisamide magnesium (HMDS)₂Mg is more stable at room temperature than Grignard compounds. The electrochemical performance can be further optimized by in situ generating the electrolytes in various solvents.

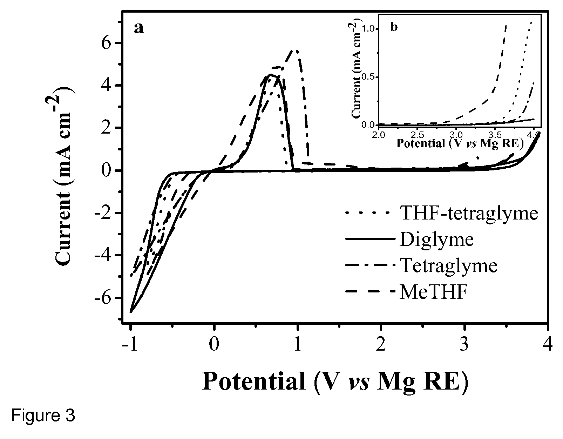

Electrolytes generated by the reaction between (HMDS)₂Mg and two equivalents AlCl₃ in different solvents such as 2MeTHF, glymes and also the mixed solvent of THF-tetraglyme (1:1) were also examined. The cyclic voltammetry measurements verified that the electrolyte solution in the above mentioned solvents can undergo Mg deposition and dissolution. The linear sweep voltammograms of these electrolytes show the influence of the solvents on the anodic stability (Fig. 3). As a result, the electrolytes in glymes show the best performance possessing an anodic stability close to 4 Volt.

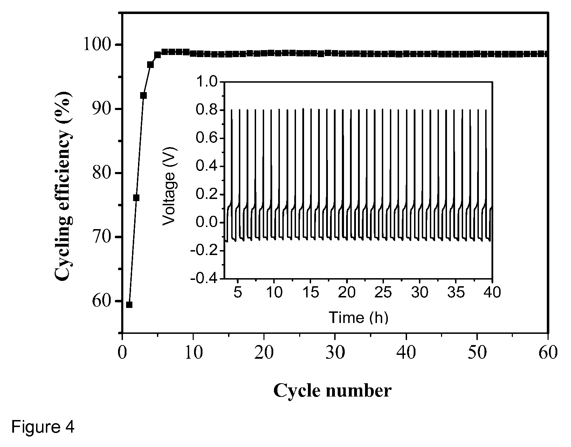

The Mg cycling efficiency has been determined by galvanostatic method using a polished platinum disc as working electrode and Mg as reference electrode. A constant cathodic current of 0.5 mA cm⁻² was initially passed through the cell until the total electric charge of 1 C cm⁻² was reached. Then, an anodic current of 0.5 mA cm⁻² was applied until the cut-off potential of 800 mV was reached. The time of cathodic current divided by the time of anodic current is defined as the re-oxidation efficiency. Figure 4 shows the representative plots of cycling efficiencies and the first 40 chronopotentiograms (inset) of Mg deposition and dissolution on Pt in the 0.35 M (HMDS)₂Mg-2AlCl₃/diglyme electrolyte.

The conductivities were measured by a conductivity meter at 25°C. The electrochemical performance of the electrolytes is summarized in Table 1. Decomposition potential of the electrolytes was judged by linear sweep voltammograms at a scan rate of 5 mA /s.

**Table1. Electrochemical properties of [Mg₂(µ-Cl)₃][HDMSAlCl₃] in different solvents**

| Solvent | Decomposition potential (V) | Conductivity (mS cm⁻¹) | Mg cycling efficiency (%) |
|---|---|---|---|
| THF | 3.3 | 1.72 | 98 |
| 2Me-THF | 2.8 | 1.28 | 98 |
| Diglyme | 3.9 | 1.70 | 99 |
| Tetraglyme | 3.7 | 0.70* | 97 |
| THF-tetraglyme (1:1 Vol.%) | 3.6 | 1.34 | 98 |

| | | | |
|---|---|---|---|
| (* deviates because of the relatively high viscosity of the tetraglyme) | | | |

The compatibility of electrodes with electrolyte is essential for developing practical rechargeable Mg batteries. In order to prove the compatibility of the (HMDS)₂Mg-2AlCl₃ electrolyte solution with the magnesium ion intercalation cathode, the Mo₆S₈ Chevrel phase cathode was synthesized by the molten salt method. Swagelok® type cells were assembled comprising the bisamide based electrolyte, Mo₆S₈ Chevrel phase cathode, and Mg anode. The cells were charged and discharged at 25°C.
Fig. 6 presents a typical voltage-capacity curve with the discharge and charge voltage limits of 0.5 V and 1.7 V. The battery demonstrates good reversible cycling behavior at a rate of 10 mA g⁻¹. The discharge capacity is around 90 mA h/ g calculated based on the weight of the cathodes active mass after 30 cycles.

These experimental results confirm that the bisamide based electrolytes of the instant invention can be used for rechargeable Mg batteries.

## Claims

1. Electrolyte for magnesium batteries generated in situ by reaction of bis(hexamethyldisilazide)magnesium with AlCl₃ in a molar ratio of from 1.3:1 to 1:3 in the presence of an organic ether solvent.

2. Electrolyte according to claim 1, wherein the molar ratio is from 1:1.5 to 1:2.5, preferably 1:2.

3. Electrolyte according to claim 1 or 2, wherein the in situ generated product is not separated.

4. Electrolyte according to any of claims 1 to 3, comprising as constituents
[Mg₂Cl₃]⁺ [((CH₃)₃Si)₂NAlCl₃]⁻ + 3 ((CH₃)₃Si)₂NAlCl₂.

5. Electrolyte according to any of claims 1 to 4, wherein the magnesium batteries are secondary magnesium batteries.

6. Electrolyte according to any of claims 1 to 5, wherein the ether solvent is selected from the group consisting of tetrahydrofuran, 2-methyltetrahydrofuran, diglyme, tetraglyme and mixtures thereof, preferably THF or diglyme.

7. Electrolyte according to any of claims 1 to 6, wherein in addition to the ether solvent an ionic liquid is added in a volume ratio of from 0.5:1 to 2:1, preferably 1:1 to 1.5:1, and wherein the ether solvent is preferably tetraglyme and the ionic liquid is selected from the group consisting of N-methyl-N-butyl-piperidinium bis(trifluorormethylsulfonyl) imide, 1-methyl-1-propylpiperidinium bis (trifluoromethylsulfonyl) imide, 1-Butyl-1-methylpyrrolidinium bis(trifluoromethylsulfonyl)imide, 1-Methyl-1-propylpyrrolidinium bis(trifluoromethylsulfonyl)imide, preferably N-methyl-N-butyl-piperidinium bis(trifluorormethanesulfonyl) imide.

8. Process for preparing an electrolyte according to any of claims 1 to 7,
wherein
i) a solution of bis(hexamethyldisliazide) magnesium in an organic ether solvent is provided,
ii) a solution of AlCl₃ in an organic ether solvent is added to the solution of i),
iii) the solutions are mixed,
wherein the molar ratio of bis(hexamethyldisilazide) magnesium to AlCl₃ from 1.3:1 to 1:3, preferably 1:1.5 to 1:2.5, especially preferred 1:2, and
wherein
the resulting product is not separated.

9. Process according to claim 8, wherein the ether solvent is selected from the group consisting of tetrahydrofuran, 2-methyltetrahydrofuran, diglyme, tetraglyme and mixtures thereof, preferably THF or diglyme.

10. Process according to claim 8 or 9, wherein in addition to the ether solvent an ionic liquid is added in a volume ratio of from 0.5:1 to 2:1, preferably 1:1 to 1.5:1, and wherein the ether solvent is preferably tetraglyme and the ionic liquid is selected from the group consisting of N-methyl-N-butyl-piperidinium bis(trifluorormethylsulfonyl) imide, 1-methyl-1-propylpiperidinium bis (trifluoromethylsulfonyl) imide, 1-Butyl-1-methylpyrrolidinium bis(trifluoromethylsulfonyl)imide, 1-Methyl-1-propylpyrrolidinium bis(trifluoromethylsulfonyl)imide, preferably N-methyl-N-butyl-piperidinium bis(trifluorormethanesulfonyl) imide.

11. A method for manufacturing a secondary magnesium battery comprising the following steps:
(a) providing an anode,
(b) providing a cathode,
(c) arranging a separator that allows a flow of magnesium ions during operation of the said battery between anode and cathode such that the cathode is physically separated from the anode, and
(d) adding the non-nucleophilic electrolyte according to any of claim 1 to 7.

12. A method for manufacturing a secondary magnesium battery according to claim 11, wherein
(a) the anode is a magnesium metal anode,
(b) the cathode comprises a stainless steel current collector coated with a Chevrel-phase intercalation represented by the formula Mo₆S₈,
(c) the separator comprises glass fiber.

13. Use of the electrolyte according to any of claims 1 to 7 for magnesium batteries, preferably secondary magnesium batteries.

14. Use according to claim 13, wherein the magnesium battery comprises a Mo₆S₈ intercalation cathode.

15. Secondary magnesium battery comprising
A) an electrolyte according to any of claims 1 to 7 or prepared according to any of claims 8 to 10,
B) Mo₆S₈ intercalation cathode,
C) a separator and
D) a magnesium metal anode.

## Patentansprüche

1. Elektrolyt für Magnesiumbatterien, erzeugt in situ durch Umsetzung von Bis(hexamethyldisilazid)-magnesium mit AlCl₃ in einem Molverhältnis von 1,3:1 bis 1:3 in Gegenwart eines organischen Ether-Lösungsmittels.

2. Elektrolyt nach Anspruch 1, wobei das Molverhältnis 1:1,5 bis 1:2,5, vorzugsweise 1:2, beträgt.

3. Elektrolyt nach Anspruch 1 oder 2, wobei das in situ erzeugte Produkt nicht abgetrennt wird.

4. Elektrolyt nach einem der Ansprüche 1 bis 3, umfassend als Bestandteile
[Mg₂Cl₃]⁺ [((CH₃)₃Si)₂NAlCl₃]⁻ + 3 ((CH₃)₃Si)₂NAlCl₂.

5. Elektrolyt nach einem der Ansprüche 1 bis 4, wobei es sich bei den Magnesiumbatterien um Magnesiumsekundärbatterien handelt.

6. Elektrolyt nach einem der Ansprüche 1 bis 5, wobei das Ether-Lösungsmittel aus der Gruppe bestehend aus Tetrahydrofuran, 2-Methyltetrahydrofuran, Diglyme, Tetraglyme und Mischungen davon, vorzugsweise THF oder Diglyme, ausgewählt ist.

7. Elektrolyt nach einem der Ansprüche 1 bis 6, wobei neben dem Ether-Lösungsmittel eine ionische Flüssigkeit in einem Volumenverhältnis von 0,5:1 bis 2:1, vorzugsweise 1:1 bis 1,5:1, zugegeben wird und wobei es sich bei dem Ether-Lösungsmittel vorzugsweise um Tetraglyme handelt und die ionische Flüssigkeit aus der Gruppe bestehend aus N-Methyl-N-butyl-piperidiniumbis(trifluormethylsulfonyl)imid, 1-Methyl-1-propylpiperidiniumbis-(trifluormethylsulfonyl)imid, 1-Butyl-1-methyl-pyrrolidiniumbis(trifluormethylsulfonyl)imid, 1-Methyl-1-propylpyrrolidiniumbis(trifluormethylsulfonyl)imid, vorzugsweise N-Methyl-N-butyl-piperidiniumbis(trifluormethansulfonyl)imid, ausgewählt ist.

8. Verfahren zur Herstellung eines Elektrolyts nach einem der Ansprüche 1 bis 7, wobei
i) eine Lösung von Bis(hexamethyldisilazid)-magnesium in einem organischen Ether-Lösungsmittel bereitgestellt wird,
ii) eine Lösung von AlCl₃ in einem organischen Ether-Lösungsmittel zu der Lösung von i) gegeben wird,
iii) die Lösungen gemischt werden,
wobei das Molverhältnis von Bis(hexamethyldisilazid)magnesium zu AlCl₃ 1,3:1 bis 1:3, vorzugsweise 1:1,5 bis 1:2,5, besonders bevorzugt 1:2, beträgt und
wobei das erhaltene Produkt nicht abgetrennt wird.

9. Verfahren nach Anspruch 8, wobei das Ether-Lösungsmittel aus der Gruppe bestehend aus Tetrahydrofuran, 2-Methyltetrahydrofuran, Diglyme, Tetraglyme und Mischungen davon, vorzugsweise THF oder Diglyme, ausgewählt wird.

10. Verfahren nach Anspruch 8 oder 9, wobei neben dem Ether-Lösungsmittel eine ionische Flüssigkeit in einem Volumenverhältnis von 0,5:1 bis 2:1, vorzugsweise 1:1 bis 1,5:1, zugegeben wird und wobei es sich bei dem Ether-Lösungsmittel vorzugsweise um Tetraglyme handelt und die ionische Flüssigkeit aus der Gruppe bestehend aus N-Methyl-N-butyl-piperidiniumbis(trifluormethylsulfonyl)imid, 1-Methyl-1-propylpiperidiniumbis-(trifluormethylsulfonyl)imid, 1-Butyl-1-methyl-pyrrolidiniumbis(trifluormethylsulfonyl)imid, 1-Methyl-1-propylpyrrolidiniumbis(trifluormethylsulfonyl)imid, vorzugsweise N-Methyl-N-butyl-piperidiniumbis(trifluormethansulfonyl)imid, ausgewählt wird.

11. Verfahren zur Herstellung einer Magnesiumsekundärbatterie, das die folgenden Schritte umfasst:
(a) Bereitstellen einer Anode,
(b) Bereitstellen einer Kathode,
(c) Anordnen eines Separators, der einen Fluss von Magnesiumionen während des Betriebs der Batterie zwischen Anode und Kathode ermöglicht, so dass die Kathode physisch von der Anode getrennt ist, und
(d) Zugeben des nicht-nukleophilen Elektrolyts nach einem der Ansprüche 1 bis 7.

12. Verfahren zur Herstellung einer Magnesiumsekundärbatterie nach Anspruch 11, wobei
(a) es sich bei der Anode um eine Magnesium-metall-Anode handelt,
(b) die Kathode einen Stromsammler aus nichtrostendem Stahl, der mit einer Chevrel-Phasen-Interkalation der Formel Mo₆S₈ beschichtet ist, umfasst,
(c) der Separator Glasfaser umfasst.

13. Verwendung des Elektrolyts nach einem der Ansprüche 1 bis 7 für Magnesiumbatterien, vorzugsweise Magnesiumsekundärbatterien.

14. Verwendung nach Anspruch 13, wobei die Magnesiumbatterie eine Mo₆S₈-Interkalationskathode umfasst.

15. Magnesiumsekundärbatterie mit
A) einem Elektrolyt nach einem der Ansprüche 1 bis 7 oder einem nach den Ansprüchen 8 bis 10 hergestellten Elektrolyt,
B) einer Mo₆S₈-Interkalationskathode,
C) einem Separator und
D) einer Magnesiummetall-Anode.

## Revendications

1. Électrolyte pour batteries au magnésium généré in situ par réaction de bis(hexaméthyldisilazide)magnésium avec AlCl₃ dans un rapport molaire de 1,3:1 à 1:3 en présence d'un solvant organique éthéré.

2. Électrolyte selon la revendication 1, le rapport molaire étant de 1:1,5 à 1:2,5, de préférence 1:2.

3. Électrolyte selon la revendication 1 ou 2, le produit généré in situ n'étant pas séparé.

4. Électrolyte selon l'une quelconque des revendications 1 à 3, comprenant comme constituants [Mg₂Cl₃]⁺ [((CH₃)₃Si)₂NAlCl₃]⁻ + 3 ((CH₃)₃Si)₂NAlCl₂.

5. Électrolyte selon l'une quelconque des revendications 1 à 4, les batteries au magnésium étant des batteries au magnésium rechargeables.

6. Électrolyte selon l'une quelconque des revendications 1 à 5, le solvant éthéré étant choisi dans le groupe constitué par le tétrahydrofurane, le 2-méthyltétrahydrofurane, le diglyme, le tétraglyme et les mélanges de ceux-ci, de préférence le THF ou le diglyme.

7. Électrolyte selon l'une quelconque des revendications 1 à 6, dans lequel, en plus du solvant éthéré, un liquide ionique est ajouté dans un rapport volumique de 0,5:1 à 2:1, de préférence 1:1 à 1,5:1, et dans lequel le solvant éthéré est de préférence le tétraglyme et le liquide ionique est choisi dans le groupe constitué par le bis(trifluorométhylsulfonyl)imide de N-méthyl-N-butyl-pipéridinium, le bis(trifluorométhylsulfonyl)imide de 1-méthyl-1-propyl-pipéridinium, le bis(trifluorométhylsulfonyl)imide de 1-butyl-1-méthyl-pyrrolidinium, le bis(trifluorométhylsulfonyl)imide de 1-méthyl-1-propyl-pyrrolidinium, de préférence le bis(trifluorométhyl-sulfonyl)imide de N-méthyl-N-butyl-pipéridinium.

8. Procédé de préparation d'un électrolyte selon l'une quelconque des revendications 1 à 7, dans lequel
i) une solution de bis(hexaméthyldisilazide)magnésium dans un solvant organique éthéré est obtenue,
ii) une solution d'AlCl₃ dans un solvant organique éthéré est ajoutée à la solution de i),
iii) les solutions sont mélangées,
dans lequel le rapport molaire entre bis(hexaméthyldisilazide)magnésium et AlCl₃ est de 1,3:1 à 1:3, de préférence 1:1,5 à 1:2,5, mieux encore 1:2, et dans lequel le produit résultant n'est pas séparé.

9. Procédé selon la revendication 8, dans lequel le solvant éthéré est choisi dans le groupe constitué par le tétrahydrofurane, le 2-méthyltétrahydrofurane, le diglyme, le tétraglyme et les mélanges de ceux-ci, de préférence le THF ou le diglyme.

10. Procédé selon la revendication 8 ou 9, dans lequel, en plus du solvant éthéré, un liquide ionique est ajouté dans un rapport volumique de 0,5:1 à 2:1, de préférence 1:1 à 1,5:1, et dans lequel le solvant éthéré est de préférence le tétraglyme et le liquide ionique est choisi dans le groupe constitué par le bis(trifluorométhylsulfonyl)imide de N-méthyl-N-butyl-pipéridinium, le bis(trifluorométhylsulfonyl)imide de 1-méthyl-1-propyl-pipéridinium, le bis(trifluorométhylsulfonyl)imide de 1-butyl-1-méthyl-pyrrolidinium, le bis(trifluorométhylsulfonyl)imide de 1-méthyl-1-propyl-pyrrolidinium, de préférence le bis(trifluorométhylsulfonyl)imide de N-méthyl-N-butyl-pipéridinium.

11. Procédé de fabrication d'une batterie au magnésium rechargeable comprenant les étapes suivantes :
(a) se procurer une anode,
(b) se procurer une cathode,
(c) disposer un séparateur qui permet une circulation d'ions magnésium pendant le fonctionnement de ladite batterie entre l'anode et la cathode de telle sorte que la cathode soit physiquement séparée de l'anode, et
(d) ajouter l'électrolyte non nucléophile selon l'une quelconque des revendications 1 à 7.

12. Procédé de fabrication d'une batterie au magnésium rechargeable selon la revendication 11, dans lequel
(a) l'anode est une anode en magnésium métallique,
(b) la cathode comprend un collecteur de courant en acier inoxydable recouvert d'une intercalation dans la phase de Chevrel représentée par la formule Mo₆S₈,
(c) le séparateur comprend de la fibre de verre.

13. Utilisation de l'électrolyte selon l'une quelconque des revendications 1 à 7 pour des batteries au magnésium, de préférence des batteries au magnésium rechargeables.

14. Utilisation selon la revendication 13, dans laquelle la batterie au magnésium comprend une cathode à intercalation Mo₆S₈.

15. Batterie au magnésium rechargeable comprenant
A) un électrolyte selon l'une quelconque des revendications 1 à 7 ou préparé selon l'une quelconque des revendications 8 à 10,
B) une cathode à intercalation Mo₆S₈,
C) un séparateur, et
D) une anode en magnésium métallique.
